# EUROPÄISCHE PATENTSCHRIFT

(11) **EP 3 396 404 B1**
(45) Veröffentlichungstag und Bekanntmachung des Hinweises auf die Patenterteilung: **19.02.2020**
(21) Anmeldenummer: 18168496.0
(22) Anmeldetag: 20.04.2018
(51) Int. Cl.: B07C 5/34, G06K 9/20, G06T 7/73, G01S 7/539, G01S 15/87

(54) **VERFAHREN ZUR LAGEERKENNUNG VON OBJEKTEN**
METHOD FOR LOCATING OBJECTS
PROCÉDÉ DE DÉTECTION DE LA POSITION D'OBJETS

(30) Priorität: 21.04.2017 DE 102017108524
(43) Veröffentlichungstag der Anmeldung: 31.10.2018
(73) Patentinhaber: Pepperl+Fuchs GmbH, 68307 Mannheim (DE)
(72) Erfinder: Steiner, Till, 68307 Mannheim (DE)
(74) Vertreter: Hamel, Armin

(56) Entgegenhaltungen:
- EP-A1- 3 029 489
- DE-A1-102004 063 488
- DE-U1-202013 105 253
- VOSSIEK M. ET AL.: "Objekterkennung mit Ultraschall", SENSORTECHNIK. VDI-BUCH, 2014, Seiten 1403-1448, XP9507946, BERLIN , HEIDELBERG

## Beschreibung

Die Erfindung betrifft ein Verfahren zur Lageerkennung von Objekten.

Damit Objekte verpackt oder in eine Vorrichtung eingebaut werden können, müssen diese sich in einer bestimmten Lage befinden. Dazu wird seit vielen Jahren die Technik der Bilderkennung verwendet. Weil Objekte aus verschiedenen Perspektiven und bei unterschiedlicher Beleuchtung vollkommen verschieden aussehen können, stellt sich die Objekterkennung mittels der Bilderkennung als äußerst schwierig heraus und wird von künstlicher Intelligenz (KI) unterstützt. Ein weiteres Problem stellt die Trennung von Objekt, Lichteffekten und Hintergrund dar. Dazu werden sehr leistungsfähige Computer und Programme eingesetzt, die es ermöglichen, zwischen Objekt und Hintergrund zu trennen. Die Bilderkennungsverfahren arbeiten dabei mit Bilddatenbanken, die sie nach vergleichbaren Mustern durchsuchen.

Sind diese Objekte identifiziert worden, so können die Objekte, die sich nicht in der richtigen Lage befinden, aussortiert werden.

Aus der EP 3 029 486 A1 ist ein Verfahren und eine Vorrichtung zur Objekterkennung mittels Ultraschall bekannt, wobei das Verfahren eine Lernphase und eine der Lernphase zeitlich nachfolgende Erkennungsphase aufweist. In der Lernphase empfängt eine Mehrzahl von Ultraschallempfängern Ultraschallwellen, die von wenigstens einem Ultraschallsender ausgesandt und an wenigstens einem in der Erkennungsphase zu erkennenden Objekt reflektiert wurden oder werden. Aus den während der Lernphase empfangenen Ultraschallwellen werden Merkmalsvektoren gewonnen und in einer Speichereinrichtung gespeichert. In der Erkennungsphase empfängt die Mehrzahl von Ultraschallempfängern Ultraschallwellen, die von dem wenigstens einen Ultraschallsender ausgesandt und an dem wenigstens einen in der Erkennungsphase zu erkennenden Objekt reflektiert wurden oder werden. Aus den während der Erkennungsphase empfangenen Ultraschallwellen werden Merkmalsvektoren gewonnen und wenigstens teilweise mit während der Lernphase gespeicherten Merkmalsvektoren verglichen. Die Erkennung eines Objektes erfolgt durch Minimierung eines im Raum der Merkmalsvektoren definierten Abstandsmaßes zwischen wenigstens einem Merkmalsvektor eines in der Erkennungsphase zu erkennenden Objektes und wenigstens einem in der Lernphase gespeicherten Merkmalsvektor.

Des Weiteren ist ein Verfahren zur Objekterkennung mittels Ultraschall mittels Ultraschallwandlern bzw. Wandlergruppen bekannt (vgl. Vossiek M., Mágori V.,: Objekterkennung mit Ultraschall In: Tränkler HR., Reindl L. (eds) Sensortechnik. VDI-Buch. Springer Vieweg, Berlin, Heidelberg. 2014. pp 1403-1448). Dabei wird eine Lageerkennung mittels Differenzprofiien anhand eines Vergleichs mit Mustern durch Fuzzy-Logiken im Sinne künstlicher Intelligenz ausgewertet.

Schließlich ist aus DE 20 2013 105 253 U1 eine Vorrichtung zur Darstellung von strukturellen Eigenschaften unter der Oberfläche eines Objektes bekannt. Diese Vorrichtung umfasst eine Analyseeinheit, ausgerichtet, Information über strukturelle Eigenschaften, die in verschiedenen Tiefen unter der Objektoberfläche gelegen sind, zu sammeln, indem einer oder mehrere Schallpulse zu dem Objekt gesendet und Reflexionen von diesen Schallpulsen von dem Objekt empfangen werden; und
eine Bilderzeugungseinheit, ausgerichtet, zu erzeugen:
ein erstes Bild in Abhängigkeit von einer ersten Teilmenge der erfassten Reflexionen, wobei das erste Bild einen Überblick darstellt, indem eine oder mehrere strukturelle Eigenschaften durch eine andere der strukturellen Eigenschaften verdeckt sein kann; und
ein zweites Bild in Abhängigkeit von einer zweiten Teilmenge der erfassten Reflexionen, wobei das zweite Bild einen Schnitt durch das erste Bild darstellt, wodurch verdeckte strukturelle Eigenschaften freigelegt werden können.

Aufgabe der vorliegenden Erfindung ist es, ein Verfahren zur Lageerkennung von Objekten bereitzustellen, bei dem mit Hilfe von Rechnern mit nur einer geringen Rechnerleistung festgestellt werden kann, ob sich ein Objekt in der gewünschten Lage befindet.

Diese Aufgabe wird nach den Merkmalen des Patentanspruchs 1 gelöst.

[A01] Die Erfindung betrifft damit ein Verfahren zur Lageerkennung von Objekten, umfassend folgende aufeinanderfolgende Schritte. In einem ersten Schritt (Schritt 1.1) werden mehrere Objekte bereitgestellt, die mindestens ein markantes Bauteil aufweisen. Dieses markante Bauteil befindet sich in einem bestimmten Bereich des Objekts, wobei in diesem Bereich auch mehr als nur ein markantes Bauteil vorhanden sein können. Dieses Objekt wird in einem zweiten Schritt (Schritt 1.2) zu einer Messstation transportiert, in der mindestens ein Ultraschallsensor fest angeordnet ist. In einem dritten Schritt (Schritt 1.3) wird das Objekt mittels Ultraschall vermessen, wobei von jedem Objekt die Ultraschallwellen reflektiert werden. Diese Ultraschallwellen werden von dem mindestens einen Ultraschallsensor wieder aufgenommen und in elektrische Signale umgewandelt. In einem vierten Schritt (Schritt 1.4) werden die elektrischen Signale einer künstlichen Intelligenz bereitgestellt. Dabei werden nur die von dem bestimmten Bereich des Objekts erhaltenen Signale ausgewertet und schließlich in ein Abbild umgewandelt. In einem letzten Schritt (Schritt 1.5) wird das enthaltene Abbild des Bereichs mit einem Referenzabbild verglichen, wobei überprüft wird, ob sich das zumindest eine markante Bauteil in dem Bereich befindet, der ausgewertet wurde. Bei dieser künstlichen Intelligenz kann es sich beispielsweise um einen Computer, zum Beispiel auf einfachen PC, handeln.

Vorteilhaft bei diesem Verfahren ist, dass mittels Ultraschall mehrere Objekte innerhalb kürzester Zeit vermessen werden können. Dabei ist es nicht erforderlich, die erhaltenen elektrischen Signale des gesamten Objekts auszuwerten, sondern nur den Bereich des Objekts, in dem sich das markante Bauteil, das als Marker dient, befinden soll. Befindet sich dieser Marker nicht in dem Bereich, der ausgewertet wurde, so befindet sich das Objekt nicht in der richtigen Lage, so dass das Objekt aussortiert wird. Die Objekte die sich in der richtigen Lage befinden, werden einer Bearbeitungsstation zugeführt, in der die Objekte in eine Vorrichtung eingebaut werden können. Zum Beispiel handelt es sich bei diesen Objekten um Platinen, die in einen Sensor eingebaut werden.

Vorteilhaft ist dabei, dass das Vermessen der Objekte, das Auswerten der elektrischen Signale und der Vergleich der einzelnen Abbilder der Objekte mit dem Referenzabbild sehr schnell erfolgen kann, ohne dass diese künstliche Intelligenz eine hohe Rechnerleistung aufweisen muss oder die verwendete Software sehr leistungsfähige sein muss. Dies liegt insbesondere daran, dass nicht alle elektrischen Signale ausgewertet werden müssen, sondern nur diejenigen Signale, die von einem bestimmten Bereich des Objekts erhalten wurden. Daher ist es möglich, als künstliche Intelligenz auch einen einfachen PC einzusetzen.

[A02] In einer vorteilhaften Ausführungsform wird ein zweites Objekt zur Messstation transportiert und ebenfalls vermessen und überprüft, ob dieses Objekt in dem Bereich, der ausgewertet wurde, einen Marker aufweist oder im Falle, dass in dem Bereich mehrerer Marker vorgesehen wird, all diese Marker in dem Bereich enthalten sind.

Damit das zweite Objekt schnell der Messstation zugeführt werden kann, ist es vorteilhaft, wenn eine Transportvorrichtung, zum Beispiel ein als Endlosband ausgebildetes Förderband, bereitgestellt wird, welches die Objekte kontinuierlich zur Messstation transportiert. Sobald das zweite Objekt vermessen wurde, wird dieses wieder aus der Messstation heraus bewegt und ein drittes Objekt der Messstation zugeführt, um in der Messstation vermessen zu werden.

Vorteilhaft ist dabei, dass die verschiedenen Objekte sehr schnell hintereinander vermessen werden können.

[A03] und [A04] Bevorzugt werden die Objekte zu einer Aussortierungsanlage transportiert, in der eine Aussortierung derjenigen Objekte erfolgt, deren Abbild nicht mit dem Referenzabbild übereinstimmt. Das Aussortieren kann dabei automatisch, zum Beispiel mittels eines Roboters oder per Hand geschehen. Dadurch wird gewährleistet, dass nur diejenigen Objekte, die die korrekte Lage aufweisen, weiterverarbeitet werden. Zur Weiterverarbeitung werden die Objekte einer Bearbeitungsstation zugeführt, in der sie entweder verpackt oder weiterverarbeitet werden. Werden diese Objekte in der Bearbeitungsstation weiterverarbeitet, so können die Objekte beispielsweise in eine Vorrichtung eingebaut werden. Beispielsweise kann es sich bei diesen Objekten um Platinen handeln, die entweder verpackt oder in einen Sensor eingebaut werden.

Ausführungsbeispiele werden im Folgenden anhand von Figuren beschrieben und näher erläutert. Es zeigen:
- Figur 1: eine Draufsicht auf ein Objekt mit einem Marker;
- Figur 2: eine perspektivische Ansicht einer Messstation sowie eine Transportvorrichtung mittels der Objekte in die Messstation transportiert werden und
- Figur 3: eine Ansicht eines Inneren der in Figur 1 gezeigten Messstation.

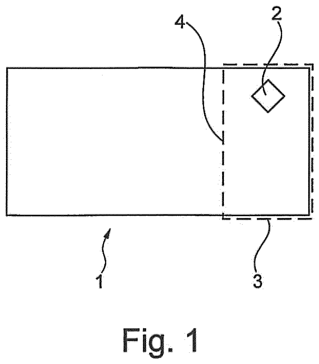

In Figur 1 ist eine Draufsicht auf ein schematisch dargestelltes Objekt 1 gezeigt, das einen Marker 2 aufweist. Bei diesem Marker 2 handelt es sich um ein markantes Bauteil, einen Durchbruch oder eine Bohrung, wobei sich dieser Marker 2 in einem definierten Bereich 3 des Objekts 1 befindet. Der Bereich 3 ist durch eine gestrichelte Linie 4 gekennzeichnet. Möglich ist jedoch auch, dass dieser Marker 2 technisch irrelevant ist und nur zur Lageerkennung des Objekts 1 dient, weil es beispielsweise eine besonders markante Struktur aufweist.

Bei diesem Objekten 1 kann es sich beispielsweise um eine Platine oder irgendein anderes Bauelement handeln. Es versteht sich, dass in dem Bereich des Objekts auch mehrere Marker vorhanden sein können, anhand derer festgestellt werden kann, ob sich das Objekt in der korrekten Lage befindet.

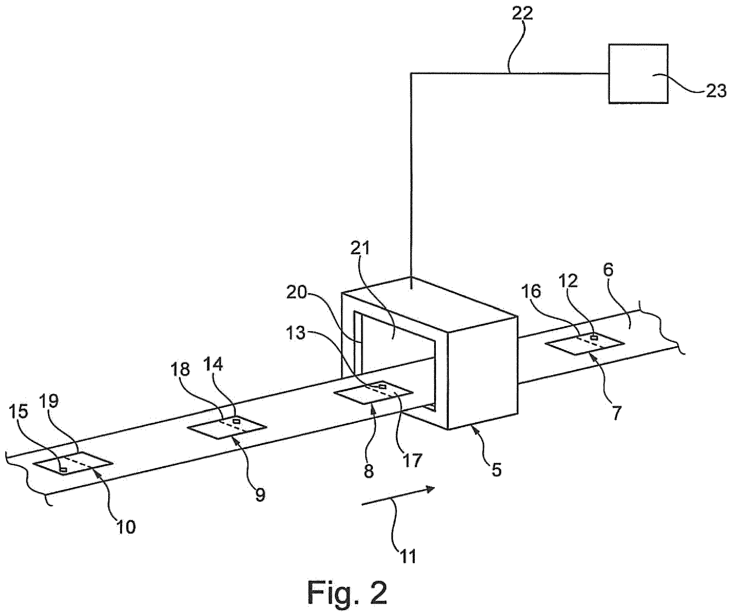

Figur 2 zeigt eine perspektivische Ansicht einer Messstation 5 sowie eine Transportvorrichtung 6 mittels der Objekte zur Vermessung in die Messstation 5 transportiert werden können. In Figur 2 ist die Transportvorrichtung 6 als Transportband ausgebildet, das jedoch nur ausschnittsweise dargestellt ist. Auf der Transportvorrichtung 6 sind mehrere Objekte 7 bis 10 angeordnet, die in Richtung des Pfeils 11, d.h. in die Messstation 5 und wieder aus dieser heraus, transportiert werden. Alle Objekte 7 bis 10 besitzen einen Marker 12 bis15. Vorzugsweise handelt es sich bei diesen Markern 12 bis 15 um ein technisch relevantes Bauteil, einen Durchbruch oder eine Bohrung. Bei den Objekten 7 bis 9 sind die Marker in einem Bereich 16 bis 18 angeordnet, der sich im vorderen Abschnitt des Objekts befindet. Bei dem Objekt 10 befindet sich hingegen der Marker 15 in einem Bereich 19, der sich nicht im vorderen, sondern im hinteren Abschnitt des Objekts 10 befindet. Bei diesem Ausführungsbeispiel werden die Objekte 7 bis 10 in der Messstation 5 mittels Ultraschall vermessen und nur der Bereich 16 bis 19 im vorderen Abschnitt der Objekte 7 bis 10 ausgewertet. Da der Marker 15 des Objekts 10 nicht in dem Bereich 19, der ausgewertet wird, angeordnet ist, befindet sich das Objekt 10 somit nicht in der gewünschten Lage.

Das Objekt 7 wurde bereits vermessen und wieder aus der Messstation 5 heraus bewegt, während die Objekte 8 bis 10 noch vermessen werden müssen und deshalb noch in die Messstation 5 transportiert werden müssen. Dazu können die Objekte 8, 9 und 10 über eine Öffnung 20 in ein Inneres 21 der Messstation 5 gelangen. Sind die Objekte vermessen worden, so gelangen sie über eine Öffnung, die der Öffnung 20 gegenüberliegt und in der Figur 2 nicht zu sehen ist, wieder aus der Messstation 5 heraus. Damit die Objekte 7 bis 10 in der Messstation 5 mittels Ultraschall vermessen werden können, weist die Messstation 5 wenigstens einen fest angeordneten Ultraschallsensor auf. Soll ein genaueres Abbild der Objekte erhalten werden, so kann die Messstation 5 auch mehr als nur einen Ultraschallsensor, beispielsweise zwei bis acht Ultraschallsensoren, aufweisen. So enthält die Messstation 5 ebenfalls mehrere Ultraschallsensoren, die jedoch in Figur 2 nicht zu sehen sind, weil sie sich im Inneren der Messstation 5 befinden.

Die Messstation 5 ist über zumindest eine elektrische Verbindung 22 mit einer künstlichen Intelligenz 23, vorzugsweise einem Rechner, verbunden. Die künstliche Intelligenz 23 sowie die elektrische Verbindung 22 sind nur schematisch dargestellt. Dabei kann die elektrische Verbindung 22 aus mehreren Leitungen bestehen, womit es sich bei der elektrischen Verbindung 22 um einen Leitungsstrang handeln kann.

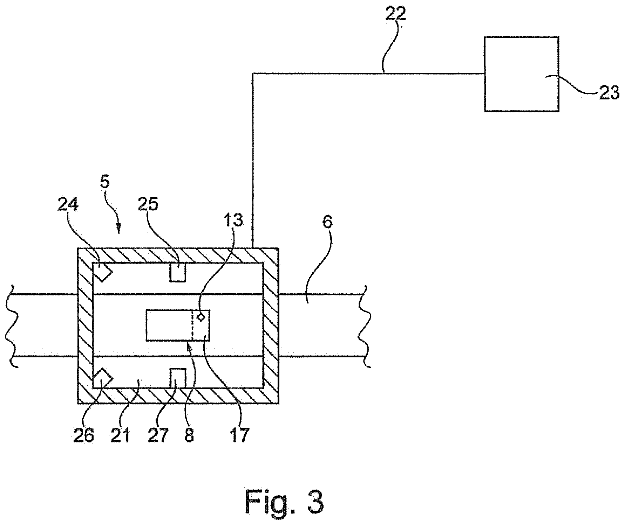

In Figur 3 ist das Innere 21 der in Figur 2 gezeigten Messstation 5 zu sehen, wobei von oben auf die Transportvorrichtung 6 geblickt wird. Das Objekt 8 ist bereits in die Messstation 5 transportiert worden und befindet sich daher innerhalb der Messstation 5. Dort wird der Bereich 17 des Objekts 8 mittels Ultraschall vermessen. Dazu sind in der Messstation 5 vier Ultraschallsensoren 24 bis 27 vorgesehen, die Ultraschallwellen aussenden. Bei der Ultraschallmessung wird dazu Wechselspannung an einen Wandler (ebenfalls nicht zu sehen) eines jeden Ultraschallsensors 24 bis 27 angelegt, wobei der Wandler vorzugsweise ein piezoelektrischer Quarz- oder Keramikschwinger ist. Durch das Anlegen der Wechselspannung wird der Wandler zu Schwingungen angeregt, so dass Ultraschallwellen entstehen, die vom jedem Ultraschallsensor 24 bis 27 ausgesendet werden. Diese von jedem Ultraschallsensor 24 bis 27 ausgesendeten Ultraschallwellen treffen auf das Objekt 8 und werden von dem Objekt 8 wieder reflektiert. Diese reflektierten Ultraschallwellen werden von dem elektrischen Wandler eines jeden Ultraschallsensors 24 bis 27 empfangen und in elektrische Signale umgewandelt. Diese elektrischen Signale werden über die elektrische Verbindung 22 der künstlichen Intelligenz 23 bereitgestellt. In der künstlichen Intelligenz 23 werden diese Signale einer Frequenz-, Phasen- bzw. Amplitudenauswertung unterzogen. Allerdings erfolgt diese Auswertung nur von den elektrischen Signalen, die von dem Bereich 17 stammen, nicht jedoch von dem vollständigen Objekt. Es wird somit ausschließlich ein Abbild des Bereichs 17 des Objekts 8 erhalten. Dieses Abbild des Bereichs 17 wird mit einem Referenzabbild verglichen. Bei diesem Referenzabbild handelt es sich um ein Abbild eines Bereichs eines vorgegebenen, d.h. gewünschten, Objekts das den bestimmten Marker aufweist.

Vorteilhaft ist dabei, dass die Auswertung sehr schnell erfolgen kann, weil die Auswertung nur von den Signalen eines bestimmten Bereichs, nicht jedoch von den Signalen des kompletten Objekts erfolgen muss.

Da Ultraschallmessungen an sich bekannt sind, wird nicht weiter im Detail darauf eingegangen.

In der Messstation 5 sind vier fest angeordnete Ultraschallsensoren vorgesehen. Es versteht sich, dass auch mehr oder weniger fest angeordnete Ultraschallsensoren vorgesehen sein können, jedoch mindestens ein Ultraschallsensor vorhanden sein muss, um ein Abbild zu erhalten, das mit dem Referenzabbild verglichen werden kann.

### Bezugszeichenliste

- 1: Objekt
- 2: Marker
- 3: Bereich
- 4: Gestrichelte Linie
- 5: Messstation
- 6: Transportvorrichtung
- 7: Objekt
- 8: Objekt
- 9: Objekt
- 10: Objekt
- 11: Pfeil
- 12: Marker
- 13: Marker
- 14: Marker
- 15: Marker
- 16: Bereich
- 17: Bereich
- 18: Bereich
- 19: Bereich
- 20: Öffnung
- 21: Innere der Messstation
- 22: Verbindung
- 23: Künstliche Intelligenz
- 24: Sensor
- 25: Sensor
- 26: Sensor
- 27: Sensor

## Patentansprüche

1. Verfahren zur Lageerkennung von Objekten, umfassend folgende aufeinanderfolgende Schritte:
1.1 es werden mehrere Objekte (7 bis 10) bereitgestellt, die mindestens einen Marker (12 bis 15) aufweisen
1.2 ein erstes Objekt (8) wird zu einer Messstation (5) transportiert, in der mindestens ein Ultraschallsensor (24 bis 27) angeordnet ist
1.3 es wird das erste Objekt (8) mittels Ultraschall vermessen, wobei von dem Objekt (8) Ultraschallwellen reflektiert werden, diese Ultraschallwellen von dem mindestens einen Ultraschallsensor (24 bis 27) wieder aufgenommen und in elektrische Signale umgewandelt werden
1.4 die elektrischen Signale werden an eine künstliche Intelligenz (23) gesendet, wobei nur diejenigen Signale ausgewertet werden, die von einem bestimmten Bereich (17) des Objekts (8) stammen, so dass ein Abbild des Bereichs (17) erhalten wird, und
1.5 das enthaltene Abbild des Bereichs (17) wird mit einem Referenzabbild verglichen wird, wobei festgestellt wird, dass sich das Objekt (10) nicht in der richtigen Lage befindet, wenn der Marker (15) sich nicht im Bereich befindet, der ausgewertet wurde.

2. Verfahren nach Patentanspruch 1, **dadurch gekennzeichnet, dass** ein zweites Objekt (9) zur Messstation (5) transportiert wird und die Schritte 1.3 bis 1.5 wiederholt werden.

3. Verfahren nach Patentanspruch 1, **dadurch gekennzeichnet, dass** diejenigen Objekte (10), deren Abbild nicht mit dem Referenzabbild übereinstimmt, in einer Aussortierungsanlage aussortiert werden und dass diejenigen Objekte (7, 8, 9), deren Abbild mit dem Referenzabbild übereinstimmt, zu einer weiteren Station transportiert werden.

4. Verfahren nach Patentanspruch 1, **dadurch gekennzeichnet, dass** die weitere Station eine Bearbeitungsstation ist, in der die Objekte (7, 8, 9) weiterverarbeitet werden.

## Claims

1. Method for the position detection of objects, comprising the following sequential steps:
1.1 several objects (7 to 10) are provided that comprise at least one marker (12 to 15),
1.2 a first object (8) is transported to a measuring station (5) in which is disposed at least one ultrasonic sensor (24 to 27),
1.3 the first object (8) is measured by means of ultrasound, wherein ultrasonic waves are reflected by the object (8), these ultrasonic waves are again received by the at least one ultrasonic sensor (24 to 27) and converted into electric signals,
1.4 the electrical signals are transmitted to an artificial intelligence (23), wherein only those signals are analyzed that originate from a specific region (17) of the object (8) such that an image of the region (17) is obtained, and
1.5 the obtained image of region (17) is compared with a reference image, wherein it is determined that the object (10) is not in the correct position if the marker (15) is not located in the region being analyzed.

2. Method as in Claim 1, **characterized in that** a second object (9) is transported to the measuring station (5) and steps 1.3 to 1.5 are repeated.

3. Method as in Claim 1, **characterized in that** that those objects (10) whose images do not conform to the reference images, are separated out in a sorting installation and that those objects (7, 8, 9) whose images agree with the reference images are transported to a further station.

4. Method as in Claim 1, **characterized in that** the further station is a processing station in which the objects (7, 8, 9) are further processed.

## Revendications

1. Procédé de détection de la position d'objets, le procédé comprenant les étapes successives suivantes :
1.1 une pluralité d'objets (7 à 10) sont fournis qui comportent au moins un marqueur (12 à 15),
1.2 un premier objet (8) est transporté vers une station de mesure (5) dans laquelle au moins un capteur à ultrasons (24 à 27) est disposé,
1.3 le premier objet (8) est mesuré par ultrasons, les ondes ultrasonores sont réfléchies par l'objet (8), ces ondes ultrasonores sont à nouveau captées par l'au moins un capteur à ultrasons (24 à 27) et converties en signaux électriques,
1.4 les signaux électriques sont envoyés à une intelligence artificielle (23), seuls les signaux provenant d'une zone déterminée (17) de l'objet (8) sont évalués pour obtenir une image de la zone (17), et
1.5 l'image contenue de la zone (17) est comparée à une image de référence, l'objet (10) étant déterminé comme n'étant pas dans la bonne position si le marqueur (15) n'est pas dans la zone qui a été évaluée.

2. Procédé selon la revendication 1, **caractérisé en ce qu'**un deuxième objet (9) est transporté vers la station de mesure (5) et **en ce que** les étapes 1.3 à 1.5 sont répétées.

3. Procédé selon la revendication 1, **caractérisé en ce que** les objets (10) dont l'image ne coïncide pas avec l'image de référence sont triés dans un système de tri et **en ce que** les objets (7, 8, 9) dont l'image coïncide avec l'image de référence sont transportés vers une autre station.

4. Procédé selon la revendication 1, **caractérisé en ce que** l'autre station est une station de traitement dans laquelle les objets (7, 8, 9) sont ensuite traités.
